(19) Europäisches Patentamt / European Patent Office / Office européen des brevets

(11) **EP 4 339 848 A1**

(12) **EUROPEAN PATENT APPLICATION**
published in accordance with Art. 153(4) EPC

(43) Date of publication:
**20.03.2024 Bulletin 2024/12**

(21) Application number: **21941993.4**

(22) Date of filing: **02.08.2021**

(51) International Patent Classification (IPC):
**G06N 20/00** (2019.01)

(52) Cooperative Patent Classification (CPC):
**G06N 20/00**

(86) International application number:
**PCT/JP2021/028618**

(87) International publication number:
**WO 2022/239264 (17.11.2022 Gazette 2022/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.05.2021 US 202163187501 P**

(71) Applicant: **Sony Group Corporation**
**Tokyo 108-0075 (JP)**

(72) Inventors:
• **YANG, Bin**
**Tokyo 108-0075 (JP)**

• **CARETTE, Thomas**
**1935 Zaventem (BE)**
• **JIMBO, Masanobu**
**Tokyo 108-0075 (JP)**
• **MARUYAMA, Shinya**
**Tokyo 108-0075 (JP)**
• **SERBANATI, Alexandru**
**1935 Zaventem (BE)**

(74) Representative: **MFG Patentanwälte**
**Meyer-Wildhagen Meggle-Freund**
**Gerhard PartG mbB**
**Amalienstraße 62**
**80799 München (DE)**

(54) **INFORMATION PROCESSING DEVICE, INFORMATION PROCESSING SERVER, INFORMATION PROCESSING METHOD, AND NON-TRANSITORY COMPUTER READABLE STORAGE MEDIUM**

(57) To achieve both protection of privacy and high inference accuracy.

Provided is an information processing apparatus includes a learning unit that clusters hierarchical data on the basis of a plurality of inference models distributed from an information processing server, and performs learning using the inference model corresponding to every cluster, and a communication unit that transmits an intermediate result generated for every cluster in the learning by the learning unit to the information processing server. The hierarchical data includes information for specifying a main element and a log collected or generated in association with the main element.

FIG. 5

EP 4 339 848 A1

**Description**

TECHNICAL FIELD

The present disclosure relates to an information processing apparatus, an information processing server, an information processing method, and a non-transitory computer-readable storage medium.

BACKGROUND ART

In recent years, a model for performing some inferences on the basis of collected data has been developed. Furthermore, a technique for enhancing the accuracy of inference as described above has been proposed. For example, Patent Document 1 discloses a technique for clustering data to be used for inference.

CITATION LIST

PATENT DOCUMENT

PATENT DOCUMENT 1: Japanese Patent Application Laid-Open No. 2020-154825

SUMMARY OF THE INVENTION

PROBLEMS TO BE SOLVED BY THE INVENTION

However, there is a possibility that the technique disclosed in Patent Document 1 does not provide a sufficient effect depending on a structure of data to be used for inference.

SOLUTIONS TO PROBLEMS

According to one aspect of the present disclosure, there is provided an information processing apparatus including a learning unit that clusters hierarchical data on the basis of a plurality of inference models distributed from an information processing server, and performs learning using the inference model corresponding to every cluster, and a communication unit that transmits an intermediate result generated for every cluster in the learning by the learning unit to the information processing server. The hierarchical data includes information for specifying a main element and a log collected or generated in association with the main element.

Furthermore, according to another aspect of the present disclosure, there is provided an image processing method performed by a processor including clustering hierarchical data on the basis of a plurality of inference models distributed from an information processing server, and performing learning using the inference model corresponding to every cluster, and transmitting an intermediate result generated for every cluster in the learning to the information processing server. The hierarchical data includes information for specifying a main element and a log collected or generated in association with the main element.

Furthermore, according to still another aspect of the present disclosure, there is provided a non-transitory computer-readable storage medium storing a program causing a computer to function as an information processing apparatus that includes a learning unit that clusters hierarchical data on the basis of a plurality of inference models distributed from an information processing server, and performs learning using the inference model corresponding to every cluster, and a communication unit that transmits an intermediate result generated for every cluster in the learning by the learning unit to the information processing server. The hierarchical data includes information for specifying a main element and a log collected or generated in association with the main element.

Furthermore, according to still another aspect of the present disclosure, there is provided an information processing server including a learning unit that generates a plurality of inference models corresponding to a plurality of clusters, respectively, and a communication unit that transmits information regarding the plurality of inference models generated by the learning unit to a plurality of information processing apparatuses. The communication unit receives an intermediate result generated by learning on the basis of hierarchical data clustered on the basis of the plurality of inference models and the inference model corresponding to every cluster from the plurality of information processing apparatuses, the learning unit updates the plurality of inference models on the basis of a plurality of the intermediate results, and the hierarchical data includes information for specifying a main element and a log collected or generated in associated with the main element.

Furthermore, according to still another aspect of the present disclosure, there is provided an information processing method performed by a processor including generating a plurality of inference models corresponding to a plurality of clusters, respectively, transmitting information regarding the plurality of generated inference models to a plurality of information processing apparatuses, receiving an intermediate result generated by learning on the basis of hierarchical data clustered on the basis of the plurality of inference models and the inference model corresponding to every cluster from the plurality of information processing apparatuses, and updating the plurality of inference models on the basis of a plurality of the intermediate results. The hierarchical data includes information for specifying a main element and a log collected or generated in association with the main element.

Furthermore, according to still another aspect of the present disclosure, there is provided a non-transitory computer-readable storage medium storing a program causing a computer to function as an information processing server that includes a learning unit that generates a plurality of inference models corresponding to a plurality of clusters, respectively, and a communication unit that transmits information regarding the plurality of inference models generated by the learning unit to a plurality of information processing apparatuses. The communication unit receives an intermediate result generated by learning on the basis of hierarchical data clustered on the basis of the plurality of inference models and the inference models corresponding to every cluster from the plurality of information processing apparatuses, the learning unit updates the plurality of inference models on the basis of a plurality of the intermediate results, and the hierarchical data includes information for specifying a main element and a log collected or generated in association with the main element.

BRIEF DESCRIPTION OF DRAWINGS

Fig. 1 is a block diagram illustrating a configuration example of a system 1 according to an embodiment of the present disclosure.
Fig. 2 is a block diagram illustrating a configuration example of an information processing apparatus 10 according to the present embodiment.
Fig. 3 is a block diagram illustrating a configuration example of an information processing server 20 according to the present embodiment.
Fig. 4 is a diagram illustrating an example of a model corresponding to hierarchical data according to the present embodiment.
Fig. 5 is a schematic diagram for describing a flow of processing executed by the system 1 according to the present embodiment.
Fig. 6 is a flowchart illustrating a flow of processing executed by the system 1 according to the present embodiment.
Fig. 7 is a diagram illustrating an example of clustering of hierarchical data according to the present embodiment.
Fig. 8 is a diagram for describing an operation of the system 1 in a case where a main element according to the present embodiment is an access point 40.
Fig. 9 is a diagram for describing an operation of the system 1 in a case where the main element according to the present embodiment is a category GC of a product.
Fig. 10 is a diagram for describing an operation of the system 1 in a case where the main element according to the present embodiment is a person and a label y is an index related to a health condition of the person.
Fig. 11 is a diagram for describing an operation of the system 1 in a case where the main element according to the present embodiment is a person and the label y is an expression of the person.
Fig. 12 is a block diagram illustrating a hardware configuration example of an information processing apparatus 90 according to an embodiment of the present disclosure according to the present embodiment.

MODE FOR CARRYING OUT THE INVENTION

A preferred embodiment of the present disclosure is hereinafter described in detail with reference to the accompanying drawings. Note that, in this specification and the drawings, the components having substantially the same functional configuration are assigned with the same reference sign and the description thereof is not repeated.

Note that, the description will be given in the following order.

1. Embodiment

1.1. Overview
1.2. System configuration example
1.3. Configuration example of information processing apparatus 10
1.4. Configuration example of information processing server 20
1.5. Details of functions

1.6. Application example

2. Hardware configuration example
3. Conclusion

<1. Embodiment>

<<1.1. Overview>>

First, an overview of an embodiment of the present disclosure will be described.

As described above, in recent years, models (inference models) for performing some inferences on the basis of collected data has been developed.

According to the inference models, it is also possible to implement various inferences with high accuracy on the basis of unknown data. Thus, the generation and utilization of the inference models are actively performed in various fields.

However, depending on the generation of the inference model and a structure of data used for inference by the inference model, it may be difficult to generate an inference model with high accuracy.

Examples of the data described above include hierarchical data.

The hierarchical data may be defined as, for example, data including information for specifying a main element and a log collected or generated in association with the main element.

As an example, it is assumed that a device 80 communicates with a plurality of other devices and performs some inferences on the basis of a log collected for every communication partner.

In this case, the main element may be a device to be a communication partner of the device 80.

Furthermore, in this case, the generated log may have a feature corresponding to the communication partner, a pair of the device 80 and the communication partner, or the like.

Thus, when learning using logs is performed without distinguishing communication partners, there is a possibility that not only it is difficult to generate an inference model having high accuracy but also an increase in time required for convergence, over-learning, or the like occurs.

On the other hand, for example, as disclosed in Patent Document 1, there is also a method for clustering data and then performing learning for each data belonging to every cluster.

As described above, a method for classifying data having different tendencies of features into a plurality of clusters and performing learning for every data belonging to each cluster is also useful for the hierarchical data.

However, in the method disclosed in Patent Document 1, since a clustering result cannot be corrected on the basis of the inference result, it is difficult to generate a highly accurate inference model.

Furthermore, for example, in a case where a server collects data from a plurality of devices and performs learning on the basis of the data, protection of privacy is also a problem.

On the other hand, as a method for protecting privacy of data in a case where learning using data collected from a plurality of devices is performed, there is also a method called federated learning.

However, general federated learning aims to generate a single inference model from data received from a plurality of devices.

Thus, in a case where data having various tendencies such as hierarchical data is used in the general federated learning, there is a possibility that the increase in time required for convergence, over-learning, or the like occurs.

In order to reduce the possibility described above, for example, a method for clustering the data in accordance with the feature of the device that collects the data and performing learning for every data belonging to each cluster is also conceivable.

However, in this case, all the data collected from a certain device are classified into the same cluster.

Thus, in a case where the inference using the log generated for every communication partner of the plurality of communication partners described above is performed, it may be difficult to reduce the possibility of the occurrence of the increase in time required for convergence, over-learning, or the like.

A technical idea according to the embodiment of the present disclosure has been conceived focusing on the above points, and implements both the protection of privacy and high inference accuracy.

Thus, an information processing apparatus 10 according to the embodiment of the present disclosure includes a learning unit 120 that clusters hierarchical data on the basis of a plurality of inference models distributed from an information processing server 20 and performs learning using the inference model corresponding to every cluster.

Furthermore, the information processing apparatus 10 according to the embodiment of the present disclosure includes a communication unit 130 that transmits an intermediate result generated for every cluster in the learning by the learning unit 120 to the information processing server 20.

That is, the information processing apparatus 10 according to the embodiment of the present disclosure clusters hierarchical data retained by the information processing apparatus itself by using the plurality of inference models distributed from the information processing server 20, and transmits the intermediate result generated by learning for every cluster to the information processing server 20.

Here, the intermediate result may be information including a feature value included in the hierarchical data and a value calculated from a label, and may be information in which it is difficult to restore the feature value and the label.

On the other hand, the information processing server 20 according to the embodiment of the present disclosure includes a learning unit 210 that generates a plurality of inference models corresponding to a plurality of clusters, respectively, and a communication unit that transmits information regarding the plurality of inference models generated by the learning unit 210 to a plurality of information processing apparatuses 10.

Here, one of features of a communication unit 220 is to receive, from the plurality of information processing apparatuses 10, intermediate results generated by learning on the basis of the hierarchical data clustered on the basis of the plurality of inference models and the inference model corresponding to every cluster.

Furthermore, one of features of the learning unit 210 is to update the plurality of inference models on the basis of the plurality of the intermediate results.

That is, the information processing server 20 according to the embodiment of the present disclosure updates the inference model corresponding to each cluster on the basis of the intermediate result for every cluster received from the plurality of information processing apparatuses 10, and distributes information regarding the update to each of the information processing apparatuses 10.

As described above, in a system 1 according to the embodiment of the present disclosure, the clustering and the transmission of the intermediate result by the information processing apparatus 10, and the update of the inference model and the distribution of the information regarding the update by the server may be repeatedly executed.

According to the processing described above, it is possible to guarantee convergence of the inference model and simultaneously improve a clustering system and inference accuracy.

Furthermore, according to the processing described above, it is possible to improve the protection performance of privacy by using the intermediate result that is difficult to restore to original data.

Hereinafter, a system configuration example for implementing the above description will be described in detail.

<<1.2. System configuration example>>

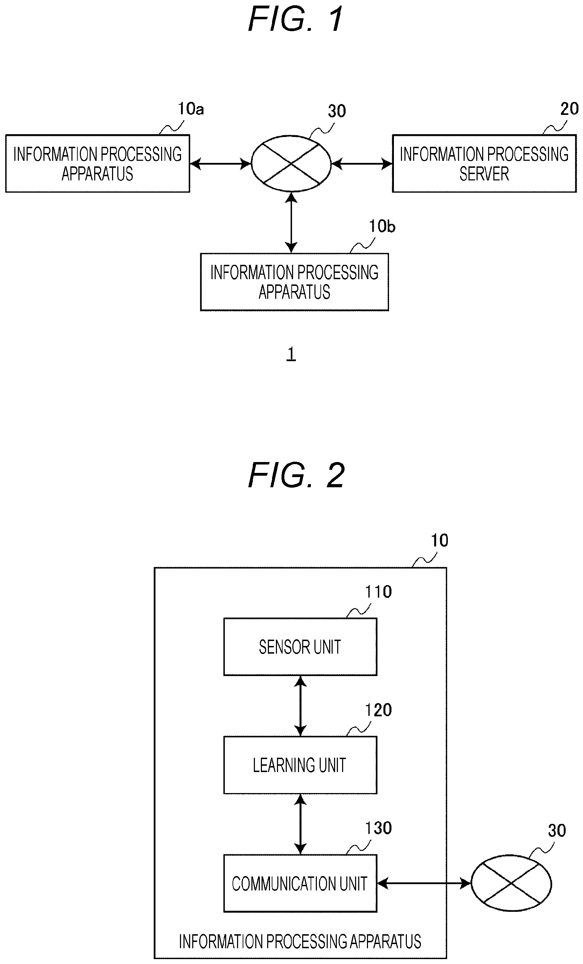

Fig. 1 is a block diagram illustrating a configuration example of the system 1 according to the embodiment of the present disclosure.

As illustrated in Fig. 1, the system 1 according to the present embodiment includes the plurality of information processing apparatuses 10 and the information processing server 20.

Each of the information processing apparatuses 10 and the information processing server 20 are connected to each other to be able to communicate via a network 30.

Note that, Fig. 1 illustrates a case where the system 1 includes information processing apparatuses 10a and 10b, but the number of information processing apparatuses 10 according to the present embodiment is not limited to such an example.

(Information processing apparatus 10)

The information processing apparatus 10 according to the present embodiment performs clustering of hierarchical data by using the inference model distributed from the information processing server 20.

Furthermore, the information processing apparatus 10 according to the present embodiment performs learning using data belonging to each cluster and an inference model corresponding to the cluster, and transmits an intermediate result to the information processing server 20.

The information processing apparatus 10 according to the present embodiment may be, for example, a personal computer, a smartphone, a tablet, a game machine, a wearable device, or the like.

(Information processing server 20)

The information processing server 20 according to the present embodiment generates an inference model corresponding to a set cluster and distributes the inference model to the plurality of information processing apparatuses 10.

Furthermore, the information processing server 20 according to the present embodiment receives an intermediate result corresponding to each cluster from the plurality of information processing apparatuses 10, and updates each inference model on the basis of the intermediate result.

The information processing server 20 according to the present embodiment distributes information regarding update of each inference model to the plurality of information processing apparatuses 10.

(Network 30)

The network 30 according to the present embodiment mediates communication between the information processing apparatus 10 and the information processing servers 20.

<<1.3. Configuration example of information processing apparatus 10>>

Next, a configuration example of the information processing apparatus 10 according to the present embodiment will be described in detail.

Fig. 2 is a block diagram illustrating the configuration example of the information processing apparatus 10 according to the present embodiment.

As illustrated in Fig. 2, the information processing apparatus 10 according to the present embodiment may include a sensor unit 110, the learning unit 120, and the communication unit 130.

(Sensor unit 110)

The sensor unit 110 according to the present embodiment collects various kinds of sensor information.

Sensor information collected by the sensor unit 110 may be used as one element (feature value) of the hierarchical data.

Thus, the sensor unit 110 may include various sensors for collecting sensor information available as the element of the hierarchical data.

On the other hand, in a case where the hierarchical data does not include the sensor information, the information processing apparatus 10 may not include the sensor unit 110.

(Learning unit 120)

The learning unit 120 according to the present embodiment clusters the hierarchical data on the basis of the plurality of inference models distributed from the information processing servers 20.

Furthermore, the learning unit 120 according to the present embodiment performs learning using the inference model corresponding to every cluster.

As described above, the hierarchical data according to the present embodiment may include information for specifying a main element and a log collected or generated in association with the main element.

Furthermore, the learning unit 120 may cluster pieces of hierarchical data related to different main elements on the basis of the plurality of inference models.

Functions of the learning unit 120 according to the present embodiment are implemented by various processors.

Details of the functions of the learning unit 120 according to the present embodiment will be separately described.

(Communication unit 130)

The communication unit 130 according to the present embodiment communicates with the information processing server 20 via the network 30.

The communication unit 130 receives, for example, an inference model, information regarding the update of the inference model, or the like from the information processing server 20.

Furthermore, the communication unit 130 transmits the intermediate result generated by the learning unit 120 to the information processing server 20.

Note that, the communication unit 130 according to the present embodiment may communicate with another device different from the information processing server 20.

Furthermore, in this case, the communication unit 130 may generate and store a log related to the communication with another device.

The log related to the communication with another device may be used as a part of the hierarchical data.

The configuration example of the information processing apparatus 10 according to the present embodiment has been described above. Note that, the configuration described above with reference to Fig. 2 is merely an example, and the configuration of the information processing apparatus 10 according to the present embodiment is not limited to such an example.

For example, the information processing apparatus 10 according to the present embodiment may further include an input unit that receives an input of information by a user, a display unit that displays various kinds of information, and the like.

Furthermore, in a case where the information processing apparatus 10 includes the input unit, the input information may be used as a part of the hierarchical data.

The configuration of the information processing apparatus 10 according to the present embodiment can be flexibly modified in accordance with specifications and operations.

<<1.4. Configuration example of information processing server 20>>

Next, a configuration example of the information processing server 20 according to the present embodiment will be described.

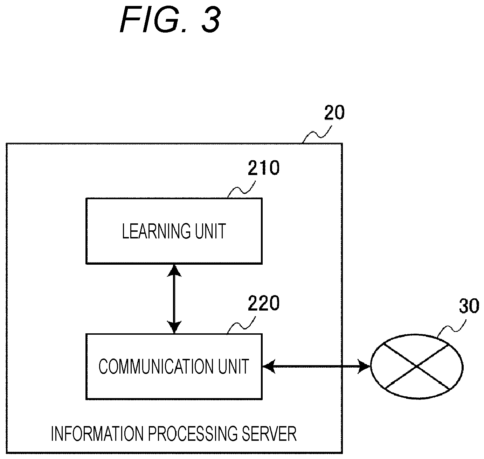

Fig. 3 is a block diagram illustrating the configuration example of the information processing server 20 according to the present embodiment.

As illustrated in Fig. 3, the information processing server 20 according to the present embodiment may include the learning unit 210 and the communication unit 220.

(Learning unit 210)

The learning unit 210 according to the present embodiment generates the plurality of inference models corresponding to the plurality of clusters, respectively.

Furthermore, the learning unit 210 according to the present embodiment updates the plurality of inference models on the basis of the plurality of intermediate results received by the communication unit 220.

Functions of the learning unit 210 according to the present embodiment are implemented by various processors.

Details of the functions of the learning unit 210 according to the present embodiment will be separately described.

(Communication unit 220)

The communication unit 220 according to the present embodiment communicates with the plurality of information processing apparatuses 10 via the network 30.

The communication unit 220 transmits, for example, the inference model generated by the learning unit 210 and information regarding the update of the inference model to the plurality of information processing apparatuses 10.

Furthermore, the communication unit 220 receives intermediate results from the plurality of information processing apparatuses 10.

The configuration example of the information processing server 20 according to the present embodiment has been described above. Note that, the above configuration with reference to Fig. 3 is merely an example, and the configuration of the information processing server 20 according to the present embodiment is not limited to such an example.

The information processing server 20 according to the present embodiment may further include, for example, an input unit that receives an input of information by the user, a display unit that displays various kinds of information, and the like.

The configuration of the information processing server 20 according to the present embodiment can be flexibly modified in accordance with specifications and operation.

<<1.5. Details of functions>>

Next, functions of each of the information processing apparatus 10 and the information processing server 20 according to the present embodiment will be described in detail.

As described above, the information processing apparatus 10 according to the present embodiment clusters hierarchical data retained by the information processing apparatus itself by using the plurality of inference models distributed from the information processing servers 20, and transmits the intermediate result generated by learning for every cluster to the information processing server 20.

Furthermore, the information processing server 20 according to the present embodiment updates the inference model corresponding to every cluster on the basis of the intermediate result for every cluster received from the plurality of information processing apparatuses 10, and distributes information regarding the update to each of the information processing apparatuses 10.

In order to implement the processing described above, it is required to share a model corresponding to hierarchical data between the information processing apparatus 10 and the information processing server 20.

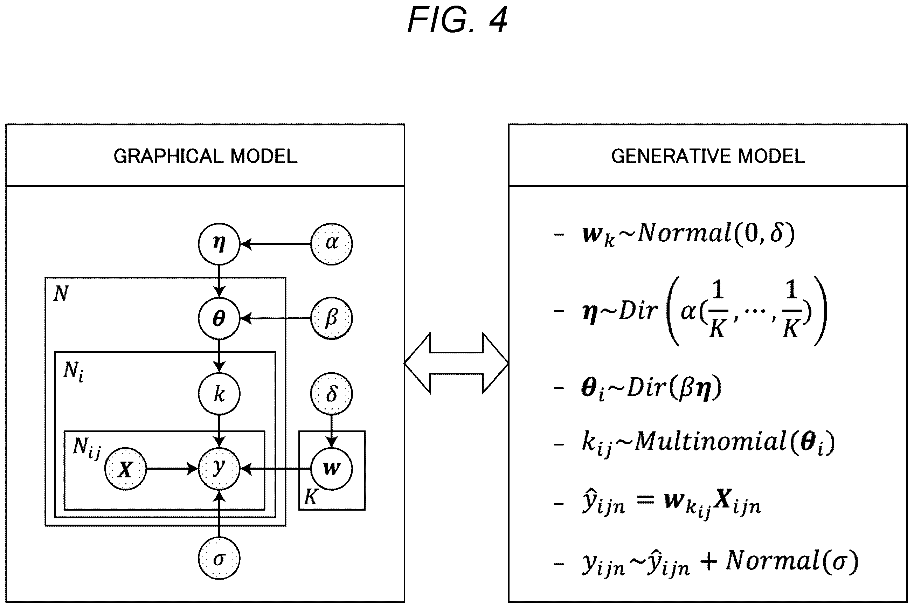

Fig. 4 is a diagram illustrating an example of the model corresponding to the hierarchical data according to the present embodiment.

An example of a graphical model corresponding to hierarchical data and an example of a generative model corresponding to hierarchical data are illustrated on a left side of Fig. 4 and a right side of Fig. 4, respectively.

In each model illustrated in Fig. 4, $\eta$, $\theta$, and $\kappa$ correspond to a set (global) of the information processing apparatuses 10, the information processing apparatus 10, and a main element, respectively.

However, each model illustrated in Fig. 4 is merely an example, and the graphical model and the generation model according to the present embodiment are only required to be appropriately designed in accordance with characteristic of hierarchical data, characteristic of a label (objective variable) to be inferred, or the like.

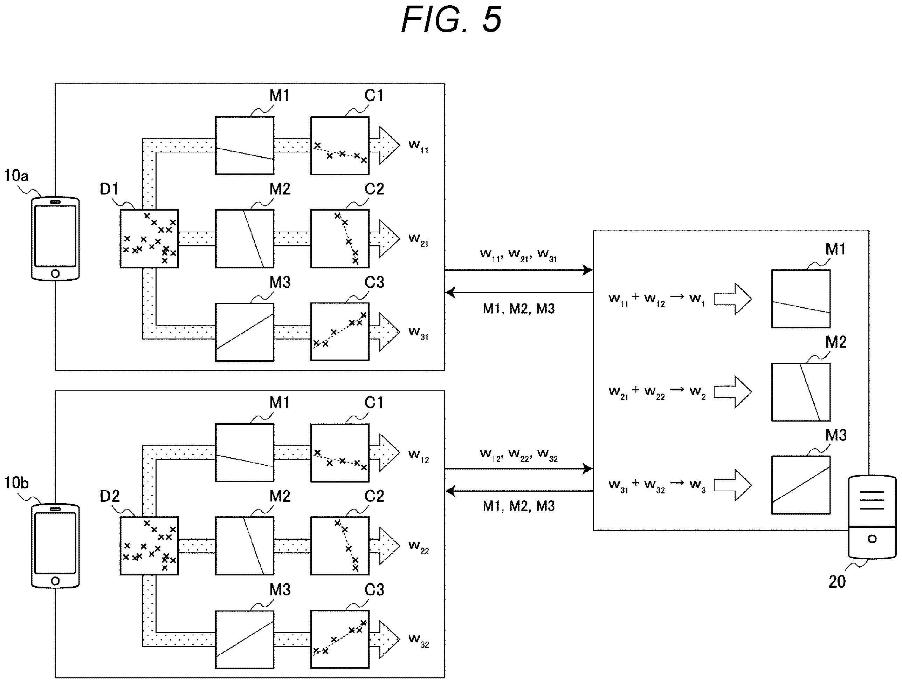

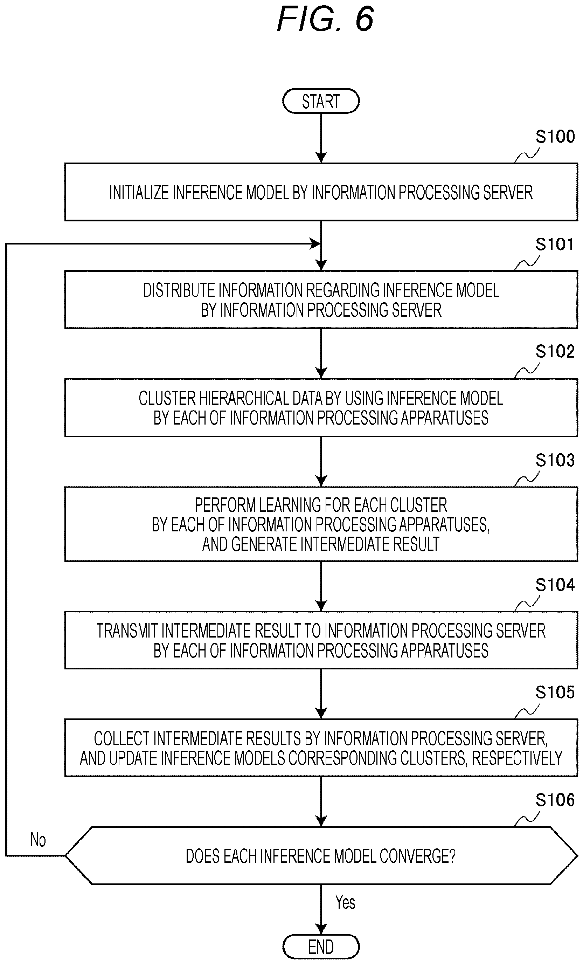

Next, a flow of processing executed by the system 1 according to the present embodiment will be described in detail with reference to Figs. 5 and 6.

Fig. 5 is a schematic diagram for describing a flow of processing executed by the system 1 according to the present embodiment.

Furthermore, Fig. 6 is a flowchart illustrating a flow of processing executed by the system 1 according to the present embodiment.

Note that, in Fig. 5, processing by the information processing apparatuses 10a and 10b is illustrated, but as described above, the system 1 according to the present embodiment may include three or more information processing apparatuses 10.

Furthermore, Fig. 5 illustrates a case where the information processing server 20 generates three inference models M1 to M3 corresponding to three clusters C1 to C3, respectively, but the number of clusters and inference models according to the present embodiment is not limited to such an example.

The number of clusters and inference models according to the present embodiment are only required to be appropriately designed in accordance with characteristic of hierarchical data, characteristic of a label (objective variables) to be inferred, or the like.

First, as illustrated in Fig. 6, the information processing server 20 initializes the inference model (S100).

In the case of the example illustrated in Fig. 5, the information processing server 20 initializes the inference models M1 to M3.

Subsequently, the information processing server 20 distributes information related to the inference model (S101).

In the case of the example illustrated in Fig. 5, the information processing server 20 may transmit all information constituting the inference models M1 to M3.

Subsequently, each of the information processing apparatuses 10 clusters the hierarchical data by using the inference model (S102).

In the case of the example illustrated in Fig. 5, the information processing apparatus 10a classifies hierarchical data D1 into any of clusters C1 to C3 corresponding to the inference models M1 to M3, respectively, by using the distributed inference models M1 to M3.

Similarly, the information processing apparatus 10b classifies hierarchical data D2 into any of the clusters C1 to C3 corresponding to the inference models M1 to M3, respectively, by using the distributed inference models M1 to M3.

Subsequently, each of the information processing apparatuses performs learning for each cluster (S103).

In the case of the example illustrated in Fig. 5, the information processing apparatus 10a performs learning for every cluster of the clusters C1 to C3 and generates intermediate results $w_{11}$ to $w_{31}$ corresponding to the clusters C1 to C3, respectively.

Similarly, the information processing apparatus 10b performs learning for every cluster of the clusters C1 to C3 and generates intermediate results $w_{12}$ to $w_{32}$ corresponding to the clusters C1 to C3, respectively.

Subsequently, each of the information processing apparatuses 10 transmits the intermediate result to the information processing server 20 (S104).

In the example illustrated in Fig. 5, the information processing apparatus 10a transmits the intermediate results $w_{11}$ to $w_{31}$ to the information processing server.

Similarly, the information processing apparatus 10b transmits the intermediate results $w_{12}$ to $w_{32}$ to the information processing server 20.

Subsequently, the information processing server 20 collects the received intermediate result for every cluster, and updates the inference models corresponding to the clusters, respectively (S105).

In the case of the example illustrated in Fig. 5, the information processing server 20 calculates $w_1$ from the intermediate results $w_{11}$ and $w_{12}$ and updates the inference model M1.

Similarly, the information processing server 20 calculates $w_2$ from the intermediate results $w_{21}$ and $w_{22}$ and updates the inference model M2.

Similarly, the information processing server 20 calculates $w_3$ from the intermediate results $w_{31}$ and $w_{32}$ and updates the inference model M3.

Subsequently, the information processing server 20 determines whether or not each inference model converges (S106).

In a case where the information processing server 20 determines that each inference model converges (S106: Yes), the system 1 ends the series of processing.

On the other hand, in a case where the information processing server 20 determines that each inference model does not converge (S106: Yes), the information processing server 20 returns to step S101 and distributes information related to the inference model.

In the case of the example illustrated in Fig. 5, the information processing server 20 may transmit $w_1$, $w_2$, and $w_3$ to the information processing apparatuses 10a and 10b, for example.

In a case where the information processing server 20 returns to step S101, the information processing apparatus 10 and the information processing server 20 repeatedly execute the following processing.

The flow of the processing by the system 1 according to the present embodiment has been described above in detail.

Next, information transmitted and received between the information processing apparatus 10 and the information processing server 20 according to the present embodiment will be described in more detail.

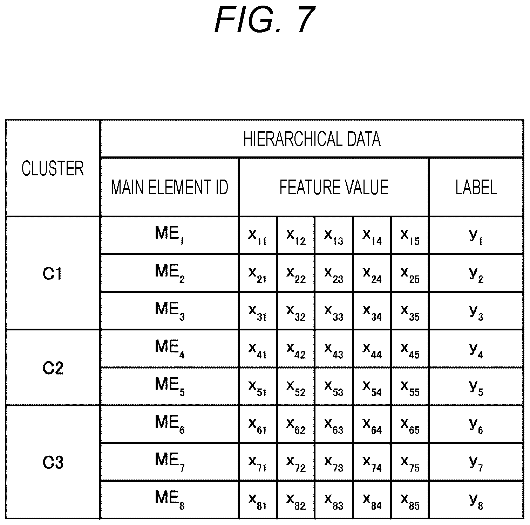

Fig. 7 is a diagram illustrating an example of clustering of the hierarchical data according to the present embodiment.

In the example illustrated in Fig. 7, hierarchical data having a main element $ID:ME_1$, a main element $ID:ME_2$, and a main element $ID:ME_3$ is classified into the cluster C1.

Furthermore, hierarchical data having a main element $ID:ME_4$ and a main element $ID:ME_5$ is classified into the cluster C2.

Furthermore, hierarchical data having a main element $ID:ME_6$, a main element $ID:ME_7$, and a main element $ID:ME_8$ is classified into the cluster C2.

Here, the main element ID is an example of the information for specifying the main element.

Furthermore, the hierarchical data includes not only the main element ID but also the log collected or generated in association with the main element.

The log may include, for example, a feature value and a label (objective variable).

Note that, in the example illustrated in Fig. 7, the feature value includes five elements of $x_{n1}$ to $x_{n5}$, but this is merely an example, and the number of elements included in the feature value according to the present embodiment is not limited to such an example.

The intermediate result according to the present embodiment may be a value calculated from the feature value and the label included in the hierarchical data.

In a case where the clustering of the hierarchical data is performed as illustrated in Fig. 7, the information processing apparatus 10 may set the intermediate results $w_{11}$, $w_{21}$, and $w_{31}$ corresponding to the clusters C1 to C3 as follows.

$$w_{11} = \{A_1, b_1\}$$

$$w_{21} = \{A_2, b_2\}$$

$$w_{31} = \{A_3, b_3\}$$

Here, $A_k$ and $b_k$ in the above description may be values calculated, respectively, on the basis of the feature value and the label belonging to a cluster Ck.

Hereinafter, calculation examples of $A_k$ and $b_k$ will be described.

$$A_1 = A(x_{11}, x_{12}, x_{13}, x_{14}, x_{15}, y_1,$$
$$x_{21}, x_{22}, x_{23}, x_{24}, x_{25}, y_2,$$
$$x_{31}, x_{32}, x_{33}, x_{34}, x_{35}, y_3)$$

$$b_1 = b(x_{11}, x_{12}, x_{13}, x_{14}, x_{15}, y_1,$$
$$x_{21}, x_{22}, x_{23}, x_{24}, x_{25}, y_2,$$
$$x_{31}, x_{32}, x_{33}, x_{34}, x_{35}, y_3)$$

$$A_2 = A(x_{41}, x_{42}, x_{43}, x_{44}, x_{45}, y_4,$$
$$x_{51}, x_{52}, x_{53}, x_{54}, x_{55}, y_5)$$

$$b_2 = b(x_{41}, x_{42}, x_{43}, x_{44}, x_{45}, y_4,$$
$$x_{51}, x_{52}, x_{53}, x_{54}, x_{55}, y_5)$$

$$A_3 = A(x_{61}, x_{62}, x_{63}, x_{64}, x_{65}, y_6,$$
$$x_{71}, x_{72}, x_{73}, x_{74}, x_{75}, y_7,$$
$$x_{81}, x_{82}, x_{83}, x_{84}, x_{85}, y_8)$$

$$b_3 = b(x_{61}, x_{62}, x_{63}, x_{64}, x_{65}, y_6,$$
$$x_{71}, x_{72}, x_{73}, x_{74}, x_{75}, y_7,$$
$$x_{81}, x_{82}, x_{83}, x_{84}, x_{85}, y_8)$$

As described above, the information processing apparatus 10 according to the present embodiment may calculate the intermediate result without using the information for specifying the main element.

Furthermore, according to the calculation described above, as the number of hierarchical data belonging to the cluster Ck increases, it becomes more difficult to restore an original feature value $x_{ij}$ and a label $y_i$ from $A_k$ and $b_k$.

Therefore, according to the generation of the intermediate result according to the present embodiment, it is possible to effectively enhance the protection performance of privacy.

Next, the information regarding the update of the inference model transmitted by the information processing server 20 to the information processing apparatus 10 will be described in more detail.

Here, it is assumed that the inference models M1 to M3 corresponding to the clusters C1 to C3, respectively, are generated.

In this case, the information processing server 20 may calculate the information $w_1$ to $w_3$, respectively, regarding the updates of the inference models M1 to M3 as follows, for example.

$$w_1 = (w_{11}, w_{12}, w_{13}, \ldots, w_{1n})$$

$$w_2 = (w_{21}, w_{22}, w_{23}, \ldots, w_{2n})$$

$$w_3 = (w_{31}, w_{32}, w_{33}, \ldots, w_{3n})$$

According to the calculation described above, as the number n of information processing apparatuses for which the intermediate result is calculated increases, it becomes more difficult to restore the original feature value $x_{ij}$ and the label $y_i$ from $w_k$, and it becomes possible to effectively enhance the protection performance of privacy.

On the other hand, the information processing apparatus 10 can perform inference with higher accuracy by receiving the information $w_1$ to $w_3$, respectively, regarding the update of the inference models M1 to M3.

For example, in a case where a label $y_9$ of a feature value $x_9$ belonging to the cluster C3 is inferred, the information processing apparatus 10 is only required to calculate $f(w_3, x_9)$.

As described above, the learning unit 120 of the information processing apparatus 10 according to the present embodiment can infer the label on the basis of the feature value and the inference model.

<<1.6. Application example>>

Next, the application of the system 1 according to the present embodiment will be described by way of specific examples.

For example, the main element according to the present embodiment may be various devices that communicate with the information processing apparatus 10.

In this case, the information processing apparatus 10 may use, as the hierarchical data, various logs collected with communication with the device.

Hereinafter, an example of a case where the main element according to the present embodiment is an access point that communicates with the information processing apparatus 10 will be described.

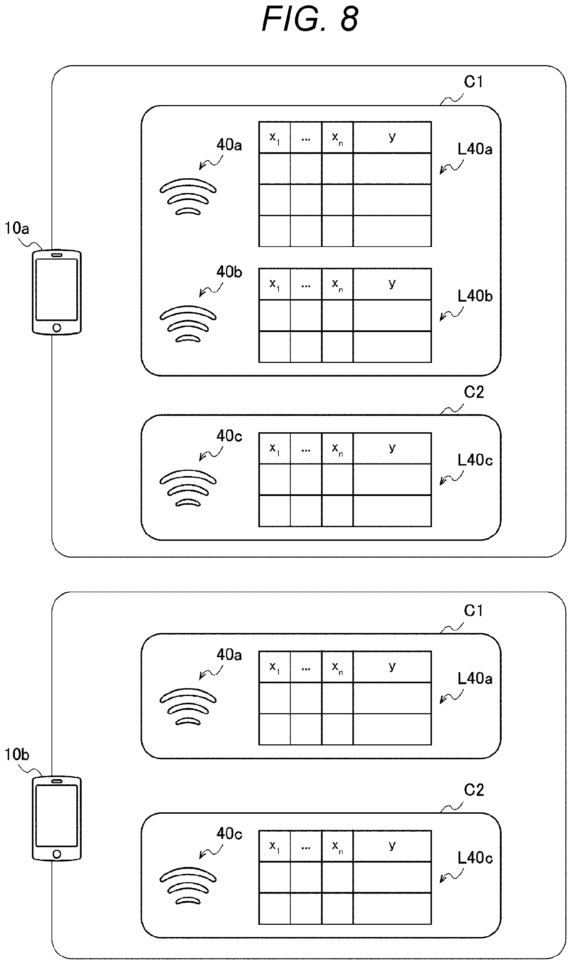

Fig. 8 is a diagram for describing an operation of the system 1 in a case where the main element according to the present embodiment is an access point 40.

Note that, Fig. 8 illustrates an operation in a case where the information processing apparatus 10 is a smartphone.

In the case of the present example, the information processing apparatus 10 collectively retains a communication log L40 for every access point 40.

The communication log L40 is associated with information for specifying the access point 40 and is used as the hierarchical data.

At this time, each communication log L40 includes the feature values $x_1$ to $x_n$ and the label y.

For example, received radio wave intensity, clear channel assessment (CCA) busy time, or the like may be adopted as the feature values $x_1$ to $x_n$.

Furthermore, an index representing communication quality related to the access point 40 may be used as the label y.

Each of the information processing apparatuses 10 clusters the communication log L40 including the feature values $x_1$ to $x_n$ and the label y described above by using the plurality of inference models distributed from the information processing server 20.

For example, in the case of the example illustrated in Fig. 8, the information processing apparatus 10a classifies communication logs L40a for three records corresponding to an access point 40a and communication logs L40b for two records corresponding to an access point 40b into the cluster C1.

Furthermore, the information processing apparatus 10a classifies communication logs L40c corresponding to two records corresponding to an access point 40c into the cluster C2.

Similarly, the information processing apparatus 10b classifies the communication logs L40a for two records corresponding to the access point 40a into the cluster C1, and classifies the communication logs L40c for two records corresponding to the access point 40c into the cluster C2.

As described above, the information processing apparatus 10 according to the present embodiment may perform clustering such that hierarchical data related to the same main element is classified into the same cluster.

Due to this clustering, learning of features corresponding to a pair or the like of a predetermined type of access point 40, a predetermined type of information processing apparatus 10, and a predetermined type of access point 40, and inference with higher accuracy are implemented.

Furthermore, at the same time, the information processing apparatus 10 may perform clustering such that pieces of hierarchical data related to different main elements are classified into the same cluster.

Due to this clustering, the number of clusters can be suppressed, and efficiency of learning is improved.

After the clustering described above is performed, each of the information processing apparatuses 10 according to the present embodiment transmits the intermediate result calculated described above to the information processing server 20 and receives the information regarding the update of the inference model.

Thereafter, each of the information processing apparatuses 10 according to the present embodiment infers the label y by using the collected feature value x and the inference model.

For example, the information processing apparatus 10 can infer the communication quality in a case where a certain access point 40 is used from the received radio wave intensity from the access point 40 by using the inference model.

Furthermore, in this case, the information processing apparatus 10 may perform control such as connection to the access point 40 in which the inferred communication quality satisfies a predetermined condition, connection to the access point 40 having the highest inferred communication quality among the plurality of access points 40, or the like.

The operation in a case where the main element according to the present embodiment is the device that communicates with the information processing apparatus 10 has been described above.

Next, an example of a case where the main element according to the present embodiment is a product category will be described.

The main element according to the present embodiment is not necessarily a device.

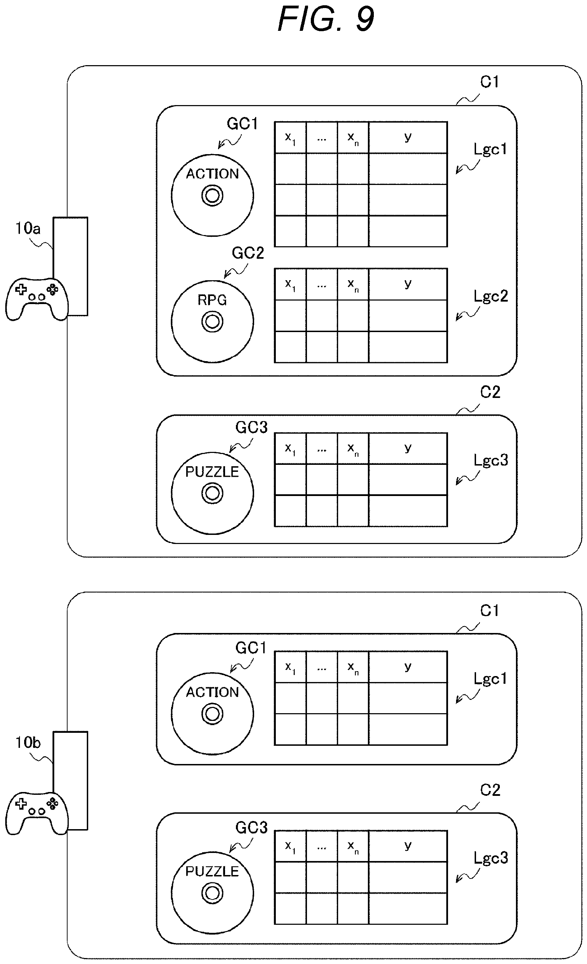

Fig. 9 is a diagram for describing the operation of the system 1 in a case where the main element according to the present embodiment is a category GC of a product.

Note that, Fig. 9 illustrates an operation in a case where the information processing apparatus 10 is a game machine and the product is a game.

In the case of the present example, the information processing apparatus 10 collectively retains a purchase log Lgc for every category GC of the game.

The purchase log Lgc is associated with information for specifying the category GC of the game and is used as the hierarchical data.

At this time, each purchase log Lgc includes the feature values $x_1$ to $x_n$ and the label y.

For example, a game manufacturer, a sales order, and the like may be adopted as the feature values $x_1$ to $x_n$.

Furthermore, an index related to purchase of a game belonging to the category GC (for example, whether or not the game is purchased or reserved) may be used as the label y.

Each of the information processing apparatuses 10 clusters the purchase log Lgc including the feature values $x_1$ to $x_n$ and the label y described above by using the plurality of inference models distributed from the information processing server 20.

For example, in the case of the example illustrated in Fig. 9, the information processing apparatus 10a classifies purchase logs Lgc1 for three records corresponding to a category GC1 of the game and purchase logs Lgc2 for two records corresponding to a category GC2 of the game into the cluster C1.

Furthermore, the information processing apparatus 10a classifies purchase logs Lgc3 for two records corresponding to a category GC3 of the game into the cluster C2.

Similarly, the information processing apparatus 10a classifies the purchase logs Lgc1 for two records corresponding to the category GC1 of the game into the cluster C1, and classifies the purchase logs Lgc3 for two records corresponding to the category GC3 of the game into the cluster C3.

After the clustering described above is performed, each of the information processing apparatuses 10 according to the present embodiment transmits the intermediate result calculated described above to the information processing server 20 and receives the information regarding the update of the inference model.

Thereafter, each of the information processing apparatuses 10 according to the present embodiment infers the label y by using the collected feature value x and the inference model.

For example, the information processing apparatus 10 can infer a possibility that the user purchases a certain game by using the inference model.

Furthermore, in this case, the information processing apparatus 10 may perform control such as explicitly presenting a game whose possibility of purchase exceeds a threshold to the user, or disposing the game to be easily visible to the user in an online shop.

Next, an example of a case where the main element according to the present embodiment is a person will be described.

In this case, the label y may be, for example, an index representing a physical condition or a mental condition of the person.

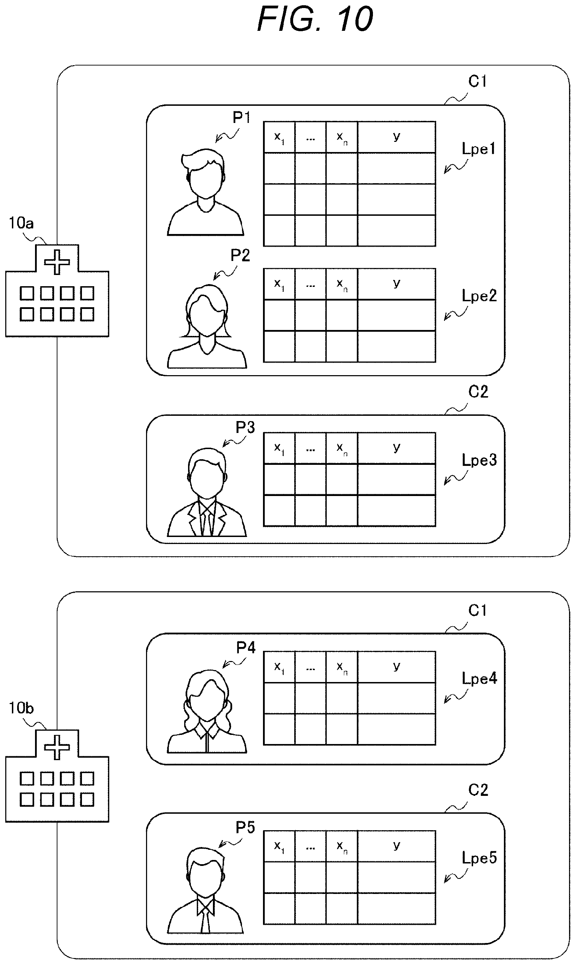

Fig. 10 is a diagram for describing an operation of the system 1 in a case where the main element according to the present embodiment is a person and the label y is an index related to the health condition of the person.

Note that, Fig. 10 illustrates an operation in a case where the information processing apparatus 10 is installed in a medical institution.

In the case of the present example, the information processing apparatus 10 collectively retains an examination log Lpe for every person P.

Examples of the feature values $x_1$ to $x_n$ included in the examination log Lpe include various examination results such as blood pressure and heart rate, symptoms, and the like.

Furthermore, the label y may be a diagnosis result by a doctor.

Each of the information processing apparatuses 10 clusters the examination log Lpe including the feature values $x_1$ to $x_n$ and the label y described above by using the plurality of inference models distributed from the information processing server 20.

For example, in the case of the example illustrated in Fig. 10, the information processing apparatus 10a classifies examination logs Lpe1 for three records corresponding to a person P1 and examination logs Lpe2 for two records corresponding to a person P2 into the cluster C1.

Furthermore, the information processing apparatus 10a classifies examination logs Lpe3 for two records corresponding to a person P3 into the cluster C2.

Similarly, the information processing apparatus 10a classifies examination logs Lpe4 for two records corresponding to a person P4 into the cluster C1, and classifies examination logs Lpe5 for two records corresponding to a person P5 into the cluster C3.

After the clustering described above is performed, each of the information processing apparatuses 10 according to the present embodiment transmits the intermediate result calculated described above to the information processing server 20 and receives the information regarding the update of the inference model.

Thereafter, each of the information processing apparatuses 10 according to the present embodiment infers the label y by using the collected feature value x and the inference model.

For example, the information processing apparatus 10 can infer a health condition of a certain person on the basis of a new examination result regarding the person by using the inference model.

Due to this inference, it is possible to temporarily determine the health condition of a certain person without performing an actual diagnosis by the doctor or the like.

Next, a case where the label y is an index representing a person emotion will be described.

The index representing the emotion of the person includes, for example, an expression of the user.

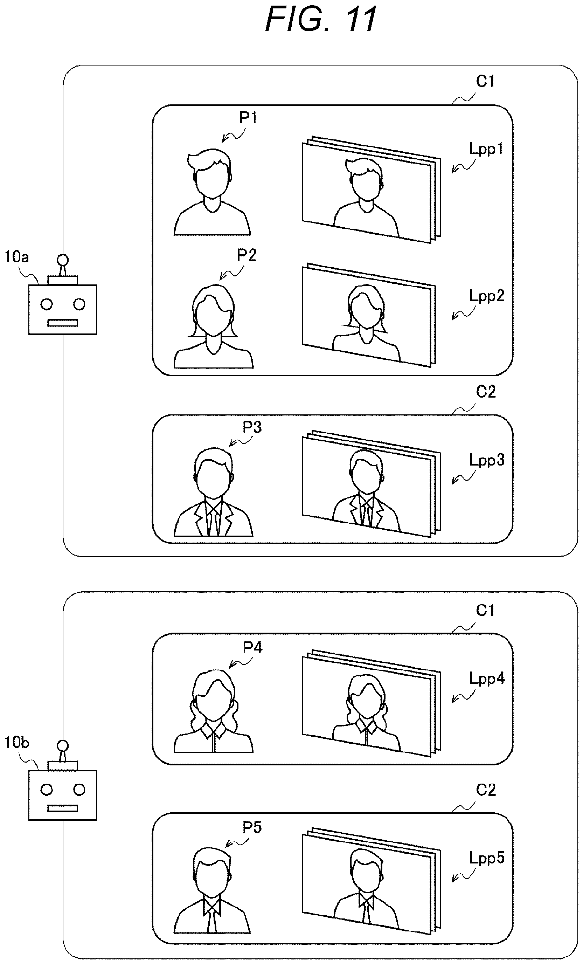

Fig. 11 is a diagram for describing an operation of the system 1 in a case where the main element according to the present embodiment is a person and the label y is an expression of the person.

Note that, Fig. 11 illustrates an operation in a case where the information processing apparatus 10 is a robot that communicates with the user.

In the case of the present example, the information processing apparatus 10 collectively retains an imaging log Lpp for every person P.

Examples of the feature values $x_1$ to $x_n$ included in the imaging log Lpp include an imaged image, a position of each part in the face, a size of each part, or the like.

Furthermore, the label y may be various inferred expressions.

Each of the information processing apparatuses 10 clusters the imaging log Lpp including the feature values $x_1$ to $x_n$ and the label y described above by using the plurality of inference models distributed from the information processing server 20.

For example, in the case of the example illustrated in Fig. 11, the information processing apparatus 10a classifies imaging logs Lpp1 for three records corresponding to the person P1 and imaging logs Lpp2 for two records corresponding to the person P2 into the cluster C1.

Furthermore, the information processing apparatus 10a classifies imaging logs Lpp3 for three records corresponding to the person P3 into the cluster C2.

Similarly, the information processing apparatus 10a classifies imaging logs Lpp4 for three records corresponding to the person P4 into the cluster C1, and classifies imaging logs Lpp5 for three records corresponding to the person P5 into the cluster C3.

After the clustering described above is performed, each of the information processing apparatuses 10 according to the present embodiment transmits the intermediate result calculated described above to the information processing server 20 and receives the information regarding the update of the inference model.

Thereafter, each of the information processing apparatuses 10 according to the present embodiment infers the label y by using the collected feature value x and the inference model.

For example, the information processing apparatus 10 can infer an expression of a certain person from an image of the person as a subject using the inference model.

Furthermore, each of the information processing apparatuses 10 according to the present embodiment may perform control such as changing behavior with respect to the user according to the inferred expression or the like.

<2. Hardware configuration example>

Next, a hardware configuration example common to the information processing apparatus 10 and the information processing server 20 according to the embodiment of the present disclosure will be described.

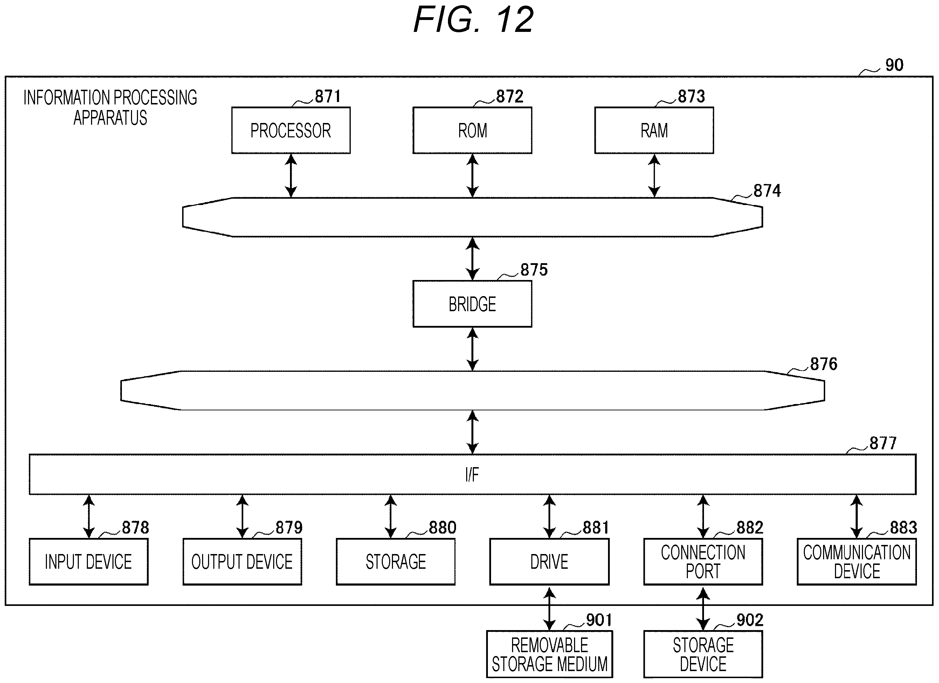

Fig. 12 is a block diagram illustrating a hardware configuration example of an information processing apparatus 90 according to an embodiment of the present disclosure.

The information processing apparatus 90 may be an apparatus having a hardware configuration equivalent to the configurations of the information processing apparatus 10 and the information processing server 20.

The information processing apparatus 90 includes, for example, a processor 871, a read-only memory (ROM) 872, a random-access memory (RAM) 873, a host bus 874, a bridge 875, an external bus 876, an interface 877, an input device 878, an output device 879, a storage 880, a drive 881, a connection port 882, and a communication device 883 as illustrated in Fig. 19. Note that, the hardware configuration illustrated here is an example, and some of the components may be omitted. Furthermore, components other than the components illustrated here may be further included.

(Processor 871)

The processor 871 functions as, for example, an arithmetic processing apparatus or a control device, and controls the overall operation of each component or a part thereof on the basis of various programs recorded in the ROM 872, the RAM 873, the storage 880, or a removable storage medium 901.

(ROM 872 and RAM 873)

The ROM 872 is a unit that stores a program read by the processor 871, data used for calculation, or the like. The RAM 873 temporarily or permanently stores, for example, a program read by the processor 871, various parameters that appropriately change when the program is executed, or the like.

(Host bus 874, bridge 875, external bus 876, and interface 877)

The processor 871, the ROM 872, and the RAM 873 are mutually connected via, for example, the host bus 874 capable of high-speed data transmission. On the other hand, the host bus 874 is connected to the external bus 876 having a relatively low data transmission speed via the bridge 875, for example. Furthermore, the external bus 876 is connected to various components via the interface 877.

(Input device 878)

As the input device 878, a component such as a mouse, a keyboard, a touch panel, a button, a switch, and a lever may be applied, for example. Moreover, as the input device 878, a remote controller (hereinafter referred to as a remote) capable of transmitting a control signal using infrared rays or other radio waves may be used. Furthermore, the input device 878 includes a voice input device such as a microphone.

(Output device 879)

The output device 879 is a device capable of visually or audibly notifying the user of acquired information, such as a display device such as a cathode ray tube (CRT), an LCD, or an organic EL, an audio output device such as a speaker or a headphone, a printer, a mobile phone, or a facsimile. Furthermore, the output device 879 according to the present disclosure includes various vibration devices capable of outputting tactile stimulation.

(Storage 880)

The storage 880 is a device for storing various kinds of data. As the storage 880, for example, there is used a magnetic storage device such as a hard disk drive (HDD), a semiconductor storage device, an optical storage device, a magneto-optical storage device, or the like.

(Drive 881)

The drive 881 is, for example, a device that reads information recorded on the removable storage medium 901 such as a magnetic disk, an optical disk, a magneto-optical disk, or a semiconductor memory, or writes information on the removable storage medium 901.

(Removable storage medium 901)

The removable storage medium 901 is, for example, a DVD medium, a Blu-ray (registered trademark) medium, an HD DVD medium, various semiconductor storage media, or the like. Of course, the removable storage medium 901 may be, for example, an IC card on which a noncontact IC chip is mounted, an electronic device, or the like.

(Connection port 882)

The connection port 882 is a port for connecting an external connection device 902 such as a universal serial bus (USB) port, an IEEE 1394 port, a small computer system interface (SCSI), an RS-232C port, or an optical audio terminal.

(External connection device 902)

The external connection device 902 is, for example, a printer, a portable music player, a digital camera, a digital video camera, an IC recorder, or the like.

(Communication device 883)

The communication device 883 is a communication device for connecting to a network, for example, a wired or wireless LAN, Bluetooth (registered trademark), or a communication card for Wireless USB (WUSB), a router for optical communication, a router for Asymmetric Digital Subscriber Line (ADSL), or a modem for various communications, or the like.

<3. Conclusion>

As described above, the information processing apparatus 10 according to the embodiment of the present disclosure includes the learning unit 120 that clusters the hierarchical data on the basis of the plurality of inference models distributed from the information processing server 20 and performs learning using the inference model corresponding to every cluster.

Furthermore, the information processing apparatus 10 according to the embodiment of the present disclosure includes a communication unit 130 that transmits an intermediate result generated for every cluster in the learning by the learning unit 120 to the information processing server 20.

According to the above configuration, it is possible to implement both protection of privacy and high inference accuracy.

The preferred embodiments of the present disclosure have been described above in detail with reference to the accompanying drawings, but the technical scope of the present disclosure is not limited to such examples. It is clear that one of ordinary skill in the technical field of the present disclosure may conceive of various modifications or corrections within the scope of the technical idea recited in claims, and it is understood that they also naturally belong to the technical scope of the present disclosure.

Furthermore, each step related to the processing described in the present specification is not necessarily processed in time series in the order described in the flowchart or the sequence diagram. For example, each step related to the processing of each device may be processed in an order different from the described order or may be processed in parallel.

Furthermore, the series of processes performed by each device described in the present description may be achieved using any of software, hardware, and a combination of software and hardware. The program constituting the software is provided inside or outside each device, for example, and is stored in advance in a non-transitory computer readable medium readable by a computer. Then, each program is read into the RAM at the time of execution by the computer, for example, and is executed by various processors. The storage medium is, for example, a magnetic disk, an optical disk, a magneto-optical disk, a flash memory, or the like. Furthermore, the computer program may be distributed via, for example, a network without using a storage medium.

Furthermore, the effects described in the present specification are merely exemplary or illustrative, and not restrictive. That is, the technology according to the present disclosure may provide other effects that are apparent to those skilled in the art from the description of the present specification, in addition to or instead of the abovementioned effects.

Note that, the following configurations also belong to the technical scope of the present disclosure.

(1) There is provided an information processing apparatus including a learning unit that clusters hierarchical data on the basis of a plurality of inference models distributed from an information processing server, and performs learning using the inference model corresponding to every cluster, and a communication unit that transmits an intermediate result generated for every cluster in the learning by the learning unit to the information processing server. The hierarchical data includes information for specifying a main element and a log collected or generated in association with the main element.

(2) In the information processing apparatus according to the above (1), the learning unit clusters pieces of hierarchical data related to different main elements on the basis of the plurality of inference models.

(3) In the information processing apparatus according to the above (1) or (2), the learning unit performs clustering such that the hierarchical data related to a same main element is classified into a same cluster.

(4) In the information processing apparatus according to any one of the above (1) to (3), the learning unit performs clustering such that pieces of hierarchical data related to different main elements are classified into a same cluster.

(5) In the information processing apparatus according to any one of the above (1) to (4), the log includes a feature value and a label.

(6) In the information processing apparatus according to the above (5), the intermediate result includes a value calculated from the feature value and the label.

(7) In the information processing apparatus according to the above (5) or (6), the learning unit infers the label on the basis of the feature value and the inference model.

(8) In the information processing apparatus according to any one of the above (1) to (7), the communication unit receives information regarding the inference model updated on the basis of the intermediate result received from a plurality of devices by the information processing server, and delivers the information to the learning unit.

(9) In the information processing apparatus according to any one of the above (5) to (7), the main element includes a device that communicates with the communication unit.

(10) In the information processing apparatus according to the above (9), the main element includes an access point that communicates with the communication unit.

(11) In the information processing apparatus according to the above (10), the label includes an index representing communication quality related to the access point.

(12) In the information processing apparatus according to any one of the above (5) to (7), the main element includes a category of a product.

(13) In the information processing apparatus according to the above (12), the label includes an index related to purchase of a product belonging to the category.

(14) In the information processing apparatus according to any one of the above (5) to (7), the main element includes a person.

(15) In the information processing apparatus according to the above (14), the label includes an index representing a physical condition or a mental condition of the person.

(16) In the information processing apparatus according to the above (14), the label includes an index representing emotion of the person.

(17) There is provided an image processing method performed by a processor including clustering hierarchical data on the basis of a plurality of inference models distributed from an information processing server, and performing learning using the inference model corresponding to every cluster, and transmitting an intermediate result generated for every cluster in the learning to the information processing server. The hierarchical data includes information for specifying a main element and a log collected or generated in association with the main element.

(18) There is provided a non-transitory computer-readable storage medium storing a program causing a computer to function as an information processing apparatus that includes a learning unit that clusters hierarchical data on the basis of a plurality of inference models distributed from an information processing server, and performs learning using the inference model corresponding to every cluster, and a communication unit that transmits an intermediate result generated for every cluster in the learning by the learning unit to the information processing server. The hierarchical data includes information for specifying a main element and a log collected or generated in association with the main element.

(19) There is provided an information processing server including a learning unit that generates a plurality of inference models corresponding to a plurality of clusters, respectively, and a communication unit that transmits information regarding the plurality of inference models generated by the learning unit to a plurality of information processing apparatuses. The communication unit receives an intermediate result generated by learning on the basis of hierarchical data clustered on the basis of the plurality of inference models and the inference model corresponding to every cluster from the plurality of information processing apparatuses, the learning unit updates the plurality of inference models on the basis of a plurality of the intermediate results, and the hierarchical data includes information for specifying a main element and a log collected or generated in associated with the main element.

(20) There is provided an information processing method performed by a processor including generating a plurality of inference models corresponding to a plurality of clusters, respectively, transmitting information regarding the plurality of generated inference models to a plurality of information processing apparatuses, receiving an intermediate result generated by learning on the basis of hierarchical data clustered on the basis of the plurality of inference models and the inference model corresponding to every cluster from the plurality of information processing apparatuses, and updating the plurality of inference models on the basis of a plurality of the intermediate results. The hierarchical data includes information for specifying a main element and a log collected or generated in association with the main element.

(21) There is provided a non-transitory computer-readable storage medium storing a program causing a computer to function as an information processing server that includes a learning unit that generates a plurality of inference models corresponding to a plurality of clusters, respectively, and a communication unit that transmits information regarding the plurality of inference models generated by the learning unit to a plurality of information processing apparatuses. The communication unit receives an intermediate result generated by learning on the basis of hierarchical data clustered on the basis of the plurality of inference models and the inference models corresponding to every cluster from the plurality of information processing apparatuses, the learning unit updates the plurality of inference models on the basis of a plurality of the intermediate results, the hierarchical data includes information for specifying a main element and a log collected or generated in association with the main element.

REFERENCE SIGNS LIST

| 1 | System |
|---|---|
| 10 | Information processing apparatus |
| 110 | Sensor unit |
| 120 | Learning unit |

130     Communication unit
20      Information processing server
210     Learning unit
220     Communication unit
40      Access point

**Claims**

1.  An information processing apparatus comprising:

    a learning unit that clusters hierarchical data on a basis of a plurality of inference models distributed from an information processing server, and performs learning using the inference model corresponding to every cluster; and
    a communication unit that transmits an intermediate result generated for every cluster in the learning by the learning unit to the information processing server,
    wherein the hierarchical data includes information for specifying a main element and a log collected or generated in association with the main element.

2.  The information processing apparatus according to claim 1, wherein the learning unit clusters pieces of hierarchical data related to different main elements on a basis of the plurality of inference models.

3.  The information processing apparatus according to claim 1, wherein the learning unit performs clustering such that the hierarchical data related to a same main element is classified into a same cluster.

4.  The information processing apparatus according to claim 1, wherein the learning unit performs clustering such that pieces of hierarchical data related to different main elements are classified into a same cluster.

5.  The information processing apparatus according to claim 1, wherein the log includes a feature value and a label.

6.  The information processing apparatus according to claim 5, wherein the intermediate result includes a value calculated from the feature value and the label.

7.  The information processing apparatus according to claim 5, wherein the learning unit infers the label on a basis of the feature value and the inference model.

8.  The information processing apparatus according to claim 1, wherein the communication unit receives information regarding the inference model updated on a basis of the intermediate result received from a plurality of devices by the information processing server, and delivers the information to the learning unit.

9.  The information processing apparatus according to claim 5, wherein the main element includes a device that communicates with the communication unit.

10. The information processing apparatus according to claim 9, wherein the main element includes an access point that communicates with the communication unit.

11. The information processing apparatus according to claim 10, wherein the label includes an index representing communication quality related to the access point.

12. The information processing apparatus according to claim 5, wherein the main element includes a category of a product.

13. The information processing apparatus according to claim 12, wherein the label includes an index related to purchase of a product belonging to the category.

14. The information processing apparatus according to claim 5, wherein the main element includes a person.

15. The information processing apparatus according to claim 14, wherein the label includes an index representing a physical condition or a mental condition of the person.

16. The information processing apparatus according to claim 14, wherein the label includes an index representing emotion of the person.

17. An image processing method performed by a processor, comprising:

clustering hierarchical data on a basis of a plurality of inference models distributed from an information processing server, and performing learning using the inference model corresponding to every cluster; and
transmitting an intermediate result generated for every cluster in the learning to the information processing server,
wherein the hierarchical data includes information for specifying a main element and a log collected or generated in association with the main element.

18. A non-transitory computer-readable storage medium storing a program causing a computer to function as:

an information processing apparatus that includes
a learning unit that clusters hierarchical data on a basis of a plurality of inference models distributed from an information processing server, and performs learning using the inference model corresponding to every cluster, and
a communication unit that transmits an intermediate result generated for every cluster in the learning by the learning unit to the information processing server,
wherein the hierarchical data includes information for specifying a main element and a log collected or generated in association with the main element.

19. An information processing server comprising:

a learning unit that generates a plurality of inference models corresponding to a plurality of clusters, respectively; and
a communication unit that transmits information regarding the plurality of inference models generated by the learning unit to a plurality of information processing apparatuses,
wherein the communication unit receives an intermediate result generated by learning on a basis of hierarchical data clustered on a basis of the plurality of inference models and the inference model corresponding to every cluster from the plurality of information processing apparatuses,
the learning unit updates the plurality of inference models on a basis of a plurality of the intermediate results, and
the hierarchical data includes information for specifying a main element and a log collected or generated in associated with the main element.

20. An information processing method performed by a processor, comprising:

generating a plurality of inference models corresponding to a plurality of clusters, respectively;
transmitting information regarding the plurality of generated inference models to a plurality of information processing apparatuses;
receiving an intermediate result generated by learning on a basis of hierarchical data clustered on a basis of the plurality of inference models and the inference model corresponding to every cluster from the plurality of information processing apparatuses; and
updating the plurality of inference models on a basis of a plurality of the intermediate results,
wherein the hierarchical data includes information for specifying a main element and a log collected or generated in association with the main element.

21. A non-transitory computer-readable storage medium storing a program causing a computer to function as:

an information processing server that includes
a learning unit that generates a plurality of inference models corresponding to a plurality of clusters, respectively; and
a communication unit that transmits information regarding the plurality of inference models generated by the learning unit to a plurality of information processing apparatuses,
wherein the communication unit receives an intermediate result generated by learning on a basis of hierarchical data clustered on a basis of the plurality of inference models and the inference models corresponding to every cluster from the plurality of information processing apparatuses,
the learning unit updates the plurality of inference models on a basis of a plurality of the intermediate results, and
the hierarchical data includes information for specifying a main element and a log collected or generated in association with the main element.

# FIG. 1

10a INFORMATION PROCESSING APPARATUS

30

20 INFORMATION PROCESSING SERVER

10b INFORMATION PROCESSING APPARATUS

1

# FIG. 2

10

110 SENSOR UNIT

120 LEARNING UNIT

130 COMMUNICATION UNIT

30

INFORMATION PROCESSING APPARATUS

# FIG. 3

INFORMATION PROCESSING SERVER

- 20
- 210 LEARNING UNIT
- 220 COMMUNICATION UNIT
- 30

## FIG. 4

GRAPHICAL MODEL

GENERATIVE MODEL

- $\boldsymbol{w}_k \sim Normal(0, \delta)$

- $\boldsymbol{\eta} \sim Dir\left(\alpha(\frac{1}{K}, \cdots, \frac{1}{K})\right)$

- $\boldsymbol{\theta}_i \sim Dir(\beta\boldsymbol{\eta})$

- $k_{ij} \sim Multinomial(\boldsymbol{\theta}_i)$

- $\hat{y}_{ijn} = \boldsymbol{w}_{k_{ij}}\boldsymbol{X}_{ijn}$

- $y_{ijn} \sim \hat{y}_{ijn} + Normal(\sigma)$

EP 4 339 848 A1

FIG. 5

EP 4 339 848 A1

# FIG. 6

```
        ( START )
            │
            ▼                                              S100
┌──────────────────────────────────────────────────────────┐
│     INITIALIZE INFERENCE MODEL BY INFORMATION PROCESSING SERVER     │
└──────────────────────────────────────────────────────────┘
            │
            ▼                                              S101
┌──────────────────────────────────────────────────────────┐
│        DISTRIBUTE INFORMATION REGARDING INFERENCE MODEL        │
│              BY INFORMATION PROCESSING SERVER              │
└──────────────────────────────────────────────────────────┘
            │
            ▼                                              S102
┌──────────────────────────────────────────────────────────┐
│     CLUSTER HIERARCHICAL DATA BY USING INFERENCE MODEL     │
│        BY EACH OF INFORMATION PROCESSING APPARATUSES        │
└──────────────────────────────────────────────────────────┘
            │
            ▼                                              S103
┌──────────────────────────────────────────────────────────┐
│             PERFORM LEARNING FOR EACH CLUSTER             │
│        BY EACH OF INFORMATION PROCESSING APPARATUSES,       │
│              AND GENERATE INTERMEDIATE RESULT              │
└──────────────────────────────────────────────────────────┘
            │
            ▼                                              S104
┌──────────────────────────────────────────────────────────┐
│  TRANSMIT INTERMEDIATE RESULT TO INFORMATION PROCESSING SERVER  │
│        BY EACH OF INFORMATION PROCESSING APPARATUSES        │
└──────────────────────────────────────────────────────────┘
            │
            ▼                                              S105
┌──────────────────────────────────────────────────────────┐
│  COLLECT INTERMEDIATE RESULTS BY INFORMATION PROCESSING SERVER, │
│ AND UPDATE INFERENCE MODELS CORRESPONDING CLUSTERS, RESPECTIVELY │
└──────────────────────────────────────────────────────────┘
            │
            ▼                                              S106
No ◁────────────────────────────────────────────────────────▷
          DOES EACH INFERENCE MODEL CONVERGE?
            │
            │ Yes
            ▼
         ( END )
```

## FIG. 7

| CLUSTER | HIERARCHICAL DATA | | | |
| --- | --- | --- | --- | --- |
| | MAIN ELEMENT ID | FEATURE VALUE | | LABEL |
| C1 | $ME_1$ | $x_{11}$ $x_{12}$ $x_{13}$ $x_{14}$ $x_{15}$ | | $y_1$ |
| | $ME_2$ | $x_{21}$ $x_{22}$ $x_{23}$ $x_{24}$ $x_{25}$ | | $y_2$ |
| | $ME_3$ | $x_{31}$ $x_{32}$ $x_{33}$ $x_{34}$ $x_{35}$ | | $y_3$ |
| C2 | $ME_4$ | $x_{41}$ $x_{42}$ $x_{43}$ $x_{44}$ $x_{45}$ | | $y_4$ |
| | $ME_5$ | $x_{51}$ $x_{52}$ $x_{53}$ $x_{54}$ $x_{55}$ | | $y_5$ |
| C3 | $ME_6$ | $x_{61}$ $x_{62}$ $x_{63}$ $x_{64}$ $x_{65}$ | | $y_6$ |
| | $ME_7$ | $x_{71}$ $x_{72}$ $x_{73}$ $x_{74}$ $x_{75}$ | | $y_7$ |
| | $ME_8$ | $x_{81}$ $x_{82}$ $x_{83}$ $x_{84}$ $x_{85}$ | | $y_8$ |

EP 4 339 848 A1

# FIG. 8

# FIG. 9

## FIG. 10

# FIG. 11

# FIG. 12

EP 4 339 848 A1

## INTERNATIONAL SEARCH REPORT

| | International application No. |
|---|---|
| | **PCT/JP2021/028618** |

### A. CLASSIFICATION OF SUBJECT MATTER

**G06N 20/00**(2019.01)i
FI:   G06N20/00

According to International Patent Classification (IPC) or to both national classification and IPC

### B. FIELDS SEARCHED

Minimum documentation searched (classification system followed by classification symbols)

G06N20/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2020-528589 A (GOOGLE LLC) 24 September 2020 (2020-09-24) particularly, paragraphs [0084]-[0089], fig. 3 | 1-21 |
| Y | JP 2020-154825 A (HITACHI INDUSTRY & CONTROL SOLUTIONS, LTD.) 24 September 2020 (2020-09-24) particularly, paragraphs [0016]-[0031] | 1-21 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **05 October 2021** | **19 October 2021** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**
Information on patent family members

International application No.

**PCT/JP2021/028618**

| Patent document cited in search report | | | Publication date (day/month/year) | Patent family member(s) | | | Publication date (day/month/year) |
|---|---|---|---|---|---|---|---|
| JP | 2020-528589 | A | 24 September 2020 | WO | 2019/032156 | A1 | |
| | | | | particularly, paragraphs [0093]-[0098], fig. 3 | | | |
| | | | | US | 2019/0050746 | A1 | |
| | | | | EP | 3491587 | A1 | |
| | | | | CN | 110892425 | A | |
| | | | | KR | 10-2020-0002034 | A | |
| JP | 2020-154825 | A | 24 September 2020 | WO | 2020/189706 | A1 | |
| | | | | particularly, paragraphs [0016]-[0031] | | | |

Form PCT/ISA/210 (patent family annex) (January 2015)

**EP 4 339 848 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020154825 A